# EUROPÄISCHE PATENTSCHRIFT

(11) **EP 0 551 591 B1**
(45) Veröffentlichungstag und Bekanntmachung des Hinweises auf die Patenterteilung: **31.01.1996**
(21) Anmeldenummer: 92119667.1
(22) Anmeldetag: 19.11.1992
(51) Int. Cl.: B60Q 1/04, B60Q 1/05

(54) **Schwenkbare Befestigung für eine Scheinwerfereinheit**
Tiltable assembly for headlamp
Montage pivotant pour phares

(30) Priorität: 11.01.1992 DE 4200508
(43) Veröffentlichungstag der Anmeldung: 21.07.1993
(73) Patentinhaber: Dr.Ing.h.c. F. Porsche Aktiengesellschaft, D-70435 Stuttgart (DE)
(72) Erfinder: Kircher, Günter, W-7531 Tiefenbronn (DE)

(56) Entgegenhaltungen:
- DE-A- 2 533 024
- US-A- 3 934 134
- US-A- 4 023 030

## Beschreibung

Die Erfindung bezieht sich auf eine schwenkbare Befestigung für eine Scheinwerfereinheit nach dem Oberbegriff des Anspruchs 1.

Es ist bei Arbeitsfahrzeugen bekannt (US-PS 39 34 134), an Lenkerarmen Scheinwerfer in der Weise zu befestigen, daß bei jeder Bewegung der Arbeitsschaufel der Scheinwerfer entsprechend mit bewegt wird.

Aufgabe der Erfindung ist es, eine Scheinwerfereinheit an einem Bagger zu schaffen, die nur zum Fahren im Straßenverkehr Verwendung findet.

Diese Aufgabe wird erfindungsgemäß durch die kennzeichendnen Merkmale des Anspruchs 1 gelöst. Weitere vorteilhafte Merkmale beinhalten die Unteransprüche.

Die mit der Erfindung hauptsächlich erzielten Vorteile bestehen darin, daß bei einem Bagger aufgrund der zerklüfteten Frontstruktur eine Befestigung einer Scheinwerfereinheit am Fahrzeug entsprechend der Vorschriften nur unzureichend möglich ist.

Damit eine Anordnung der beiden Scheinwerfereinheiten in einer annähernd gleichen Fahrzeugquerebene im Frontbereich des Baggers zum Fahren auf der Straße möglich wird, ist beispielsweise die an der rechten Seite angeordnete eine Scheinwerfereinheit mangels eines Befestigungsortes am Fahrzeugaufbau an Lagerungen eines Kurbelgetriebes des Auslegearmes befestigt.

Die Verbindung dieser Scheinwerfereinheit erfolgt über eine Haltevorrichtung, welche Verbindungsarme umfaßt, die auf Bolzen der Lagerungen für einen Verbindungslenker des Kurbelgetriebes gehalten sind.

Hierdurch bewegt sich die eine Scheinwerfereinheit entsprechend der Bewegung des Verbindungslenkers und nimmt in der Transportstellung des Auslegearmes, d.h., wenn diese entgegen der Fahrtrichtung parallel zur Fahrzeuglängsachse auf den Baggeraufbau abgelegt ist, eine Position ein, bei der die Mittenachse der Einheit in Längsrichtung des Fahrzeugs verläuft und mit einer weiteren fest am Fahrzeugaufbau gelagerten Scheinwerfereinheit etwa in einer Querebene angeordnet ist. Durch diese Anordnung ist der Lichtkegel der bewegbar angeordneten Scheinwerfereinheit unbehindert entsprechend der weiteren Einheit angeordnet und weist eine maximale Streubreite auf.

Bei einem Verschwenken des Auslegerarmes in eine Arbeitsstellung bewegt sich die Scheinwerfereinheit dementsprechend mit und nimmt bei einer maximalen Schwenkposition des Auslegerarmes nahe der Außenwand des Aufbaues eine Position in der Weise ein, daß die Mittenachse der Scheinwerfereinheit in Fahrzeug-Querrichtung verläuft.

Der Scheinwerfer kann in einer Längsebene sowie in Querrichtung und in Hochrichtung einjustiert werden, z.B. in den Lagerungen und/oder durch den Anschlag und/oder durch die Verbindungslenker. Auch ist ein Toleranz- unf Verformungsausgleich möglich. Insbesondere ist es wesentlich nach der Erfindung, daß hierzu der hintere Bolzen - in bezug auf die Fahrtrichtung - in einem Langloch der Platte gehalten wird. Desweiteren ist zum Ausgleich der vordere Bolzen in einem Langloch der Lagerung gehalten.

Ein Ausführungsbeispiel der Erfindung ist in der Zeichnung dargestellt und wird im folgenden näher beschrieben:

Es zeigt
- Fig. 1: eine Draufsicht auf einen Bagger mit über ein Kurbelgetriebe angelenkten Auslegerarm in maximaler Arbeitsstellung,
- Fig. 2: eine Draufsicht auf einen Bagger gemäß Fig. 1, aber mit einem in Transportstellung angeordnetem Auslegerarm und

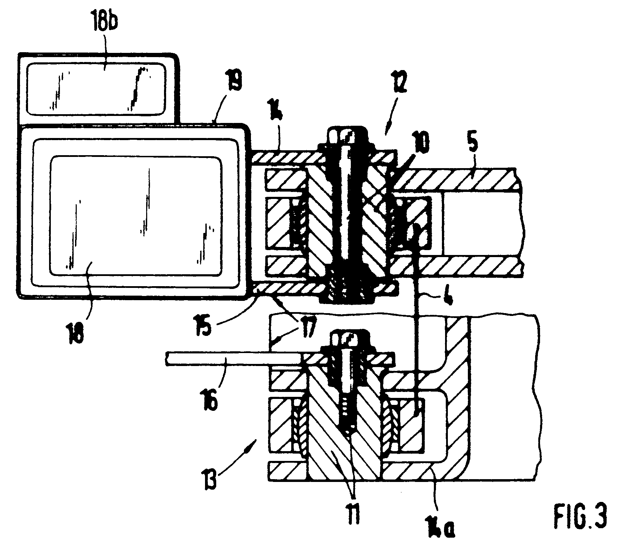

- Fig. 3: einen Schnitt durch die Lagerung eines Verbindungslenkers mit über Tragarme gehaltene Scheinwerfereinheit.

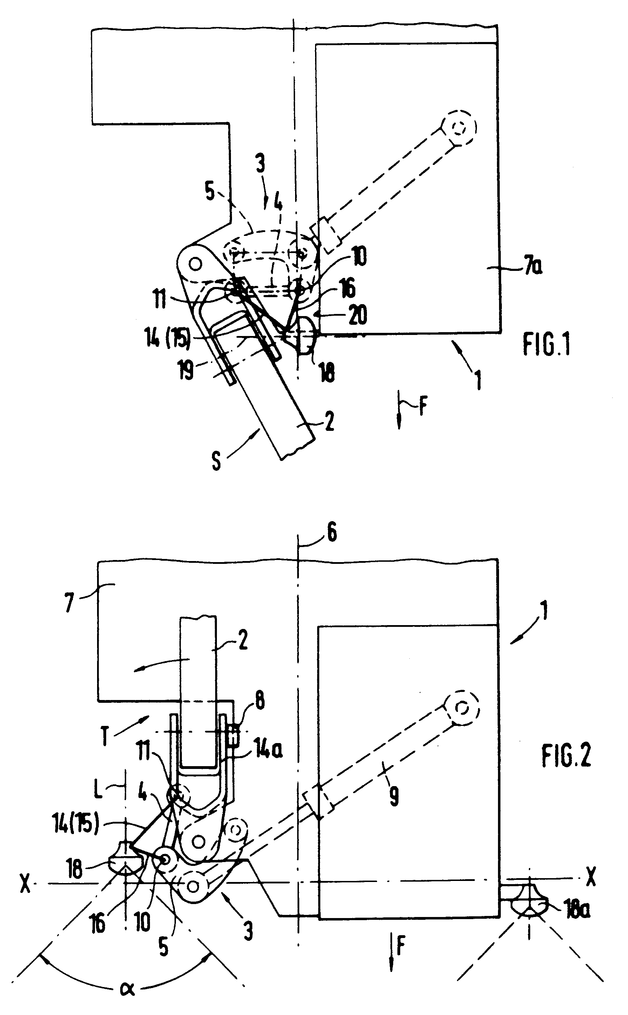

Ein Bagger 1 ist mit einem Auslegerarm 2 ausgerüstet, der endseitig eine Baggerschaufel trägt, und mittels eines Kurbelgetriebes 3, bestehend aus Verbindungslenker 4 und einem Winkelhebel 5, in eine abgelegte Transportstellung T (Fig. 2) und in mehrere Arbeitsstellungen sowie in eine gezeigte maximale Schwenkstellung S (Fig. 1) verstellbar ist.

In der Transportstellung T ist der Auslegerarm 2 nach hinten - entgegen der Fahrtrichtung F - geschwenkt und nimmt eine Lage parallel zur Fahrzeuglängsachse 6 ein und ist auf den Fahrzeugaufbau 7 abgelegt. Über einen Anschlag 8 ist die Position des Auslegerarmes 2 genau fixiert. Ein Verschwenken des Auslegerarmes 2 aus der Transportstellung T heraus in die Arbeitsstellung S wird über einen Arbeitszylinder 9 bewirkt. Der Verbindungslenker 4 ist auf Bolzen 10 und 11 der vorderen Lagerung 12 und einer hinteren Lagerung 13 - in bezug auf die Fahrtrichtung F - gehalten. Die vordere Lagerung 12 ist am Winkelhebel 5 und die weitere hintere Lagerung 13 ist an einem Auslegerschwenkbock 14a abgestützt. Mit den Bolzen 10 und 11 der Lagerungen 12 und 13 sind Arme 14, 15, 16, eine Haltevorrichtung 17 und ein Gehäuse 19 einer Scheinwerfereinheit 18 verbunden. Die beiden obenliegenden Arme 14 und 16 können auch von einem Plattenelement gebildet sein.

Wie Fig. 2 näher zeigt, ist die Scheinwerfereinheit 18 der rechten Fahrzeugseite in einer Fahrzeug-Querebene X-X mit der weiteren Scheinwerfereinheit 18a der linken Fahrzeugseite angeordnet. Die Scheinwerfereinheit 18 ist mit ihrer Mittenlängsachse L parallel zur Fahrzeugmittenachse 6 angeordnet und der Lichtkegel mit dem Winkel α ist in Fahrtrichtung F ausgerichtet und frei von Fahrzeugbauteilen.

In dieser Stellung der Scheinwerfereinheit 18 ist der Auslegerarm 2 bzw. der Auslegerschwenkbock 14a an dem Anschlag 8 gehalten, so daß in dieser Transportendstellung L eine Lage der Scheinwerfereinheit 18 parallel zur Fahrzeuglängsachse L gewährleistet ist.

Bei einer Schwenkbewegung des Auslegerarmes 2 in Arbeitsstellungen schwenkt die Scheinwerfereinheit 18 aufgrund ihrer Anbindung an die Bolzen 10, 11 entsprechend mit. Bei einer maximalen Schwenkstellung, wie Fig. 1 zeigt, ist die Mittenachse L der Scheinwerfereinheit 18 quer zum Fahrzeug angeordnet und sie steht der Aufbauwand 20 des Baggers 1 unmittelbar gegenüber.

Die Arme 14, 15 und 16 sind mit dem Gehäuse 19 der Einheit 18 verbunden und umgreifen den Winkelhebel 5 von beiden Seiten, so daß eine stabile Haltevorrichtung 17 gebildet wird.

## Patentansprüche

1. Schwenkbare Befestigung für eine Scheinwerfereinheit (18) an einem Bagger (1), der einen in einem Auslegerschwenkbock (14a) angelenkten Auslegerarm (2) umfaßt, welcher über einen Arbeitszylinder (9), der mit einem Kurbelgetriebe (3) verbunden ist, in mehrere Arbeitsstellungen sowie in eine auf den Baggeraufbau abgelegte Transportstellung (T) verschwenkbar ist, **dadurch gekennzeichnet,** daß die Scheinwerfereinheit (18) über eine in Lagerungen (12, 13) eines Verbindungslenkers (4) des Kurbelgetriebes (3) abgestützten Haltevorrichtung (17) schwenkbar derart befestigt ist, daß die Einheit (18) in der Transportstellung (T) des Auslegerarmes (2) etwa in einer senkrechten Fahrzeug-Querebene (X-X) mit einer fest angeordneten weiteren Scheinwerfereinheit (18a) angeordnet ist und einen in Fahrtrichtung (F) ausgerichteten Lichtkegel mit einem Winkel (α) aufweist und daß die Scheinwerfereinheit (18) in die Arbeitsstellung mit dem Verbindungslenker (4) verschwenkbar ist.

2. Schwenkbare Befestigung nach Anspruch 1, **dadurch gekennzeichnet,** daß der Auslegerarm (2) in der Transportstellung (T) an einem Anschlag (8) positioniert und die Scheinwerfereinheit (18) in Fahrtrichtung (F) ausgerichtet angeordnet ist.

3. Schwenkbare Befestigung nach Anspruch 1, **dadurch gekennzeichnet,** daß die Scheinwerfereinheit (18) bei einer maximalen Schwenkstellung (S) zum Aufbau (7) des Baggers (1) über die Haltevorrichtung (17) in einer quer zum Fahrzeugaufbau angeordneten Position, der Außenwand (20) des Bagger-Oberwagens (7a) unmittelbar gegenüberstehend, gehalten ist.

4. Schwenkbare Befestigung nach Anspruch 1, **dadurch gekennzeichnet,** daß die Haltevorrichtung (17) aus - in bezug auf die Fahrtrichtung (F) - zwei die vordere Lagerung (12) umgreifende Arme (14, 15) eines Gehäuses (19) für die Einheit (18) umfaßt, wobei ein weiterer Arm (16) mit der hinteren Lagerung (13) verbunden ist.

5. Schwenkbare Befestigung nach den Ansprüchen 1 und 2, **dadurch gekennzeichnet,** daß die Arme (14, 15 und 16) jeweils über einen Bolzen (10, 11) der Lagerungen (12, 13) mit dem Verbindungslenker (4) verbunden sind.

6. Schwenkbare Befestigung nach den Ansprüchen 1, 2 oder 3, **dadurch gekennzeichnet,** daß die in einer oberen horizontalen Ebene angeordneten Arme (14 und 16) ein Plattenelement bilden.

7. Schwenkbare Befestigung nach Anspruch 1, **dadurch gekennzeichnet,** daß die Scheinwerfereinheit (18) einen Blinkgeber (18b) umfaßt.

## Claims

1. A pivotable mounting for a headlamp unit (18) on an excavator (1) having a cantilever arm (2) articulated in a cantilever pivot support (14a), the said cantilever arm (2) being tiltable, by means of a working cylinder (9) connected to a crank gear (3), into a plurality of operating positions and into a transportation position (T) resting on the excavator body, characterised in that the headlamp unit (18) is pivotably mounted by means of a holding device (17), supported in bearings (12, 13) of a connecting rod (4) of the crank gear (3), in such a manner that, in the transportation position (T) of the cantilever arm (2), the unit (18) is substantially arranged in a vertical transverse plane (X-X) of the vehicle with a further, fixed headlamp unit (18a) and has a light cone having an angle (α) and oriented in the direction of travel (F), and in that the headlamp unit (18) is pivotable into the operating position by means of the connecting rod (4).

2. A pivotable mounting according to claim 1, characterised in that the cantilever arm (2) is positioned against a stop (8) in the transportation position (T) and the headlamp unit (18) is oriented in the direction of travel (F).

3. A pivotable mounting according to claim 1, characterised in that, in a maximum pivot position (S) relative to the body (7) of the excavator (1), the headlamp unit (18) is held, by means of the holding device (17), in a position arranged transversely to the vehicle body and immediately opposite the outer wall (20) of the excavator superstructure (7a).

4. A pivotable mounting according to claim 1, characterised in that the holding device (17) comprises two arms (14, 15) of a housing (19) for the unit (18), the said arms (14, 15) surrounding the front bearing (12) - in relation to the direction of travel (F) - and a further arm (16) being connected to the rear bearing (13).

5. A pivotable mounting according to claims 1 and 2, characterised in that the arms (14, 15 and 16) are each connected to the connecting rod (4) by a bolt (10, 11) of the bearings (12, 13).

6. A pivotable mounting according to claims 1, 2 or 3, characterised in that the arms (14 and 16), arranged in an upper horizontal plane, form a plate member.

7. A pivotable mounting according to claim 1, characterised in that the headlamp unit (18) comprises a flasher unit (18b).

## Revendications

1. Fixation pivotante pour une unité de phare (18) sur une excavatrice (1), qui comprend une flèche (2) articulée dans un support de pivotement de flèche (14a), laquelle flèche peut pivoter par l'intermédiaire d'un vérin (9), qui est relié à un mécanisme à manivelle (3), dans plusieurs positions de travail ainsi que dans une position de transport (T), sur la carrosserie de l'excavatrice, caractérisée en ce que l'unité de phare (18) est fixée pivotante, par l'intermédiaire d'un dispositif de retenue (17) soutenu dans des appuis (12, 13) d'un bras oscillant de liaison (4) du mécanisme à manivelle (3), de manière que l'unité (18) en position de transport (T) de la flèche (2), se trouve à peu près dans un plan transversal vertical du véhicule (X-X) avec une autre unité de phare (18a), placée fixement et présente un cône de lumière orienté dans le sens de la marche (F) avec un angle (α) et en ce que l'unité de phare (18) peut pivoter dans la position de travail avec le bras oscillant de liaison (4).

2. Fixation pivotante selon la revendication 1, caractérisée en ce que la flèche (2) en position de transport (T) est positionnée contre une butée (8) et l'unité de phare (18) est orientée dans le sens de la marche (F).

3. Fixation pivotante selon la revendication 1, caractérisée en ce que l'unité de phare (18), dans le cas d'une position de pivotement maximal (S) par rapport à la carrosserie (7) de l'excavatrice (1), est maintenue, par l'intermédiaire du dispositif de retenue (17), dans une position transversale à la carrosserie du véhicule, faisant face directement à la paroi extérieure (20) du châssis tournant (7a) de l'excavatrice.

4. Fixation pivotante selon la revendication 1, caractérisée en ce que le dispositif de retenue (17) est constitué de deux bras (14, 15) d'un boîtier (17) pour l'unité (18), entourant l'appui avant (12)- par rapport au sens de la marche (F)- , un autre bras (16) étant relié à l'appui arrière (13).

5. Fixation pivotante selon les revendications 1 et 2, caractérisée en ce que les bras (14, 15 et 16) sont reliés chacun, par un axe (10, 11) des appuis (12, 13) , avec le bras oscillant de liaison (4).

6. Fixation pivotante selon les revendications 1, 2 ou 3, caractérisée en ce que les bras (14 et 16) disposés dans un plan horizontal supérieur, forment un élément en plaque.

7. Fixation pivotante selon la revendication 1, caractérisée en ce que l'unité de phare (18) comprend un clignotant (18b) .
